(19)

Europäisches
Patentamt
European
Patent Office
Office européen
des brevets

(11) **EP 3 702 952 A1**

(12) **EUROPEAN PATENT APPLICATION**

(43) Date of publication:
**02.09.2020 Bulletin 2020/36**

(21) Application number: **19160292.9**

(22) Date of filing: **01.03.2019**

(51) Int Cl.:
**G06F 21/55** (2013.01)      **G06F 21/54** (2013.01)
**G06F 9/00** (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Worldline**
**1130 Bruxelles (BE)**

(72) Inventor: **YOUSSEF, Mohamed Amine**
**1831 Machelen (BE)**

(74) Representative: **Novagraaf Technologies**
**Bâtiment O2**
**2, rue Sarah Bernhardt**
**CS90017**
**92665 Asnières-sur-Seine Cedex (FR)**

Remarks:
The references to the drawing no. 4 is deemed to be
deleted (Rule 56(4) EPC).

(54)     **SCHEDULING METHOD ENSURING SECURITY SERVICE FOR REAL-TIME SYSTEM**

(57)     This invention relates to a method for scheduling
a sequence of task instances in a real-time computing
system, comprising assigning parameters to each instance, said parameters comprising a scheduled time;
and, for each current instance to be scheduled (S1);
- determining (S2) a time difference between the scheduled time assigned to said current instance and a current
time;
- assigning (S3) a security service to at least one instance
of said sequence from said current instance, based on
said time difference.

Fig. 2

**Description**

FIELD OF THE INVENTION

The invention relates to scheduling of real-time computing system while providing security mechanisms. In particular, integrity and authentication can be provided to the transmitted data to and from the real-time system.

BACKGROUND OF THE INVENTION

In real-time systems, the correctness of the system depends not only on the logical results of computation but also on the time at which the results are produced. However, failure to meet time constraints, may result in disasters, especially in real-time systems for nuclear power plant control, aircraft control, medical devices, missile tracking systems, etc.

A naive approach would be to increase the computing resources but such an approach is not aware of the requirements of the real-time applications and could not guaranty that these requirements could be met.

On the other side, security in another vital aspect in such system because the handled information can be very sensitive. Also, when a system is environment dependent, it should be sure that the information comes from a trusted source and has not be modified at any time in an unauthorized manner.

Researches have been undertaken in cryptography and computer security, but most of the time, they relate to general use contexts. Studies relating to the security of systems meeting temporal constraints are rare.

SUMMARY OF THE INVENTION

The object of the present invention is to alleviate at least partly the above mentioned drawbacks, and to address the security of systems having to meet temporal constraints.

This object is achieved with a method for scheduling a sequence of task instances in a real-time computing system, comprising assigning parameters to each instance, said parameters comprising a scheduled time; and, for each current instance to be scheduled;

- determining a time difference between the scheduled time assigned to said current instance and a current time;
- assigning a security service to at least one instance of said sequence from said current instance, based on said time difference.

Preferred embodiments comprise one or more of the following features, which can be taken separately or together, either in partial combination or in full combination.

- said scheduled time is based on a Worst-Case Execution Time, WCET;
- said security service consists in performing deciphering and ciphering actions on messages, respectively received and sent by said real-time system, wherein assigning a security service comprises selecting a parameter controlling said security service, and wherein said instances consume the received messages and produce the sent messages;
- said security service consists in a MAC service, providing integrity and authentication to the received and sent messages;
- a particular MAC service is selected according to a corresponding security level by comparing said time difference and a time overhead associated with a set of security levels;
- said received messages comprise a set of values obtained by applying a MAC function with different security levels;
- said sequence of task instance is ordered by applying a Earliest Deadline First, EDF, rule;
- said time difference is evenly used for determining a security service of all task instances of said sequence from said current instance
- said time difference is used for determining a security service for the next instance of said sequence, after said current instance.
- said time difference is used for determining a security service for the instance of said sequence, after said current instance, which has the lowest security service.

Another aspect of the invention relates to a computer program product comprising instructions which, when the program is executed by a computer, cause the computer to carry out the steps of the method as previously defined.

Another aspect of the invention relates to a real time system having control means for scheduling a sequence of task instances configured for assigning parameters to each task instance, said parameters comprising a scheduled time; and, for each current instance of said sequence to be scheduled;

- determining a time difference between the scheduled time assigned to said current instance and a current time;
- assigning a security service to at least one instance of said sequence from said current instance, based on said time difference.

According to some embodiments, the real time system may comprise one or more of the features enabling to perform the method as previously defined, which can be taken separately or together, either in partial combination or in full combination.

In particular, according to embodiments, the real time system may comprise means to receive messages from sources intended for said instances and means to send messages produced by said instances and intended for recipients, wherein said security service consists in a MAC service, providing integrity and authentication to said messages.

Another aspect of the invention relates to a method for scheduling a sequence of task instances in a real-time computing system, each instance receiving messages from sources and sending messages to recipient, and said method comprising assigning parameters to each instance, said parameters comprising a scheduled time; and, for each current instance of said sequence to be scheduled;

- determining a time difference between the scheduled time assigned to said current instance and a current time;
- assigning a security level to said at least one instance of said sequence from said current instance, based on said time difference.
- determining a MAC function to use for deciphering and ciphering said messages, said MAC function being selected among a set of MAC functions according to said security level.

Further features and advantages of the invention will appear from the following description of embodiments of the invention, given as non-limiting examples, with reference to the accompanying drawings listed hereunder.

BRIEF DESCRIPTION OF THE DRAWINGS

Fig. 1 shows a high-level architecture for a real-time system according to embodiments of the invention
Fig. 2 shows a high-level organigram of a method according to embodiments of the invention.
Figs. 3a, 3b, 3c shows example of task scheduling.
Fig. 4 shows curve related to tests

DETAILED DESCRIPTION OF THE INVENTION

The present invention relates to a method for scheduling a real-time system which needs to meet temporal constraints, while ensuring some security mechanisms.

Time constraints include in general a completion deadline for each, or a part of, the instances of task to be executed by the real-time system.

Generally speaking, security mechanisms add some time overhead on the execution time of the tasks (or more exactly of the instances of the task) executing on the real-time system. In consequence, security mechanisms make more difficult for the real-time system to meet its time constraints.

Security is however a crucial aspect for real-time systems, especially when these systems are used in critical applications, dealing with sensitive information. S. Ravi, A. Raghunathan and P. Kocher, "Security in Embedded systems: Design Challenges", in ACM Transactions on Embedded Computing Systems, vol. 3, no. 3, pp. 461-491, 2004 provides an overview of embedded (or real-time) systems security.

The implementation of a system security requires a detailed study of its environment to determine the security level and to choose the security services that will be used in order to achieve the appropriate security level. For instance, such a level may be set high for critical applications like power plant control, aircraft control, etc. but may relaxed to a lower value for domotic applications, The security level may also be different for each task handled by a same real-time system, for a same application.

These security services may be provided by a generic toolbox. They may comprise integrity, authentication, confidentiality and availability. Further services, as well as detailed explanations can be found, e.g. on the Wikipedia page related to information security:
https://en.wikipedia.org/wiki/Information_security

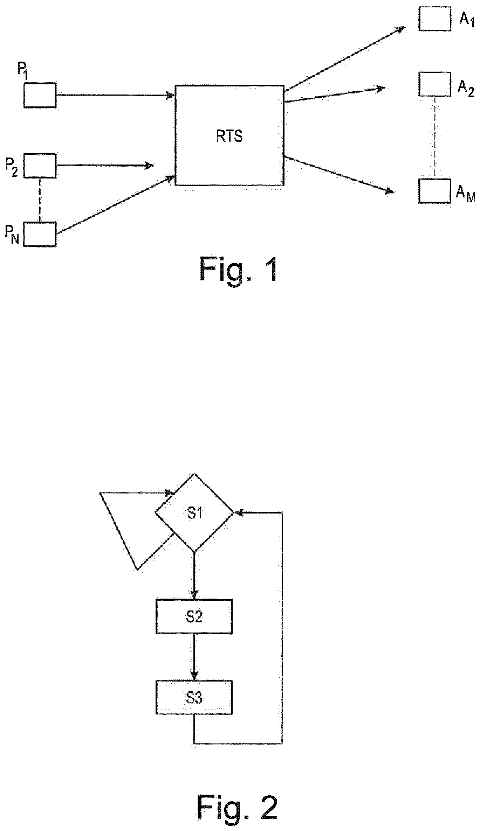

Fig. 1 depicts a high-level architecture for a real-time system according to embodiments of the invention.

In such embodiments, the real-time system RTS receives messages from N external sources $P_1, P_2... P_N$ and sends messages to M other external recipients $A_1, A_2... A_M$.

The external sources may be sensors, acquiring measurements transmitted to the real-time systems RTS. The latter receives these measurements. Instances of tasks, executing on this real-time system RTS, consume these received measurements, and produce some data, which are outputted and transmitted to the recipients $A_1$, $A_2$... $A_M$ which can be actuators, for instance.

Such a generic architecture may apply to various kinds of applications, including aircraft autopilot systems, power plant control systems, etc.

In such a model, at least, integrity and authentication needs to be provided to the transmitted messages.

Mechanisms assuring the integrity check whether a message has been modified in an unauthorized way. The manipulation includes insertion, deletion and substitution. The integrity property is usually checked by using hash functions that are deterministic one-way functions allowing to produce a compact and unique identifier (called a hash) with fixed size from a message with arbitrary length.

In contrast to traditional hash functions sued in the indexing mechanisms, which improve the efficiency search, cryptographic hash functions must satisfy additional properties. In particular, they should be consistent with the following essential properties:

1. the one-way feature of the function, for every y=h(x), wherein h is the hash function, it is "computationally infeasible" to find a pre-image x' such that y=h(x');
2. the computational difficulty to produce collisions, i.e. to find two distinct x and x' such that h(x)=h(x')

The previous properties does however not ensure the identity of the source. Indeed, a malicious entity could hash a message and send it to the system as if it comes from a trusted source.

To prevent this, according to embodiments of the invention, a MAC ("Message Authentication Code") service can be used.

The MAC services are described for instance on Wikipedia:

https://en.wikipedia.org/wiki/Message_authentication_code

MACs are created from cryptographic hash functions. A MAC is a particular instance of a hash function which involves a secret-key during the hashing process. The secret key is only known by the parties involved in the communication (a sender and a receiver). In the context depicted on FIG. 1, a first MAC can be applied to the messages transmitted from the sensors $P_1$, $P_2$... $P_N$ to the Real-Time System, RTS, and a second MAC can be applied to the messages transmitted from the real time system RTS to the actuators $A_1$, $A_2$... $A_M$.

MACs guarantee both integrity and authentication of the source. When a source wants to send a message, it uses a MAC service by hashing the content to be sent while using a secret key. Then it sends both the message and the resulting MAC. The receiver realizes the same procedure using the same key and compare the created MAC with the received one. If they are identical, the message is considered not altered since it is proved it was sent by the sender (integrity). The recipient has also the guarantee that the MAC was calculated by the send with which it shares the secret key used in the hashing (authentication).

Formally, one notes

$$M'=MAC_k(M)$$

wherein MAC is the hash function used for authentication, k is the secret key, M the initial message (i.e. the content to be sent), and M' the resulting message (for transmission over the communication media to the recipient).

There are large number of possible MAC functions, which differ from each other in terms of strength and rage (i.e. the amount of data produced per time unit). The cryptographic strength of a given instance is quantified by the number of samples an attacker should evaluate to achieve his goal. Higher this number is, the longer time the attacker needs to break this function.

In practice, MAC functions are considered reliable if attaches requires $2^{min\{l/2, |k|\}}$ operations on average, where l is the output size. Increasing the output by 2 bits implies that the search space is doubled for the attacker, requiring double time for it to break the function.

In the following, we define the security level $\alpha$ as the effort required by the attacker to break the MAC service. This security level $\alpha$ may be associated with any metrics (required time for the attacker to break the MAC, search space...), without loss of generality for the invention.

According to embodiments, a same schema of hashing function can be derived into a set of different hashing functions, each differing by the length of the key k, on the size of the output length l, and on the capacity c. This capacity c is defined as the size of the inner state, i.e. the values of internal variables that the function iteratively modifies when processing the hashing of a message. In particular, then:

$$\alpha = 2^{\{c/2,\ |k|,\ l/2\}}$$

Although the security of this MAC function depends on three parameters, its performance depends only on the capacity c. The larger the inner state of the function is, the better the security is, at the price of a longer execution time. This is due to the facts that the hash function is iterative and that the size of the internal state is directly proportional to the number of iterations needed to calculate the hashes.

Since levels of security are achieved at the cost of performance degradation, it would be interesting to take the minimum between these terms to maximize the security and to minimize the performance degradation. More precisely, it is sufficient to set a value of the capacity c to assign appropriate values for other parameters. This trade-off between performance and security will be further discussed below.

According to embodiments of the invention, then, a set of MAC functions can be defined, and noted as $MAC_\alpha$ to denote that they differ by the security level $\alpha$. This security level $\alpha$ can be achieved by setting the proper set of parameters to a same hashing function, in particular by only assigning an appropriate capacity c parameter.

Then, according to embodiments of the invention, the sources $P_1$, $P_2$... $P_N$ send a message $M'_i$ comprising the "original" message $M_i$ (the content to be transmitted, for instance a measurement of a sensor), and a set of MAC values obtained by applying a different MAC functions, each MAC function differing on its security level $\alpha$.

One can note:

$$M_i' = (M_i \parallel MAC_{\alpha 1}(M_i) \parallel MAC_{\alpha 2}(M_i) \parallel \ldots)$$

wherein the symbol "II" means that the terms are put together, for instance and preferably as a concatenation; $\alpha 1$, $\alpha 2$ represent different values of the security level $\alpha$, and $MAC_{\alpha j}(M_i)$ represent the value resulting the application of the MAC hashing function, determined by the security level $\alpha j$, on the original message, or "content", $M_i$.

The real-time system RTS uses a scheduling rule to assign priorities to instances of tasks it has to execute. In the following, we distinguish between "tasks", denoted $\tau_i$, which are programs or computing agents, and "jobs" or instances of task, denoted $\tau_{i,j}$. Each task can be executed several time, each execution being a job, and $\tau_{i,j}$ being the $j^{th}$ execution of the task $\tau_i$.

According to embodiments of the invention, when handling the message Mi', the real-time system RTS chooses, among the received set of $MAC_{\alpha j}(M_i)$ values, the one it will check, according to a time difference criteria that will be explained below.

The checking may be performed using conventional methods. For instance, the system RTS computes the selected $MAC_{\alpha j}()$ function on the received content $M_i$ and compare the resulting value with the received value $MAC_{\alpha j}(M_i)$.

Then, two situations may occur:

- both values are different. Then, the system RTS may trigger an alarm to indicate that an abnormality has occurred. The management of this abnormality is outside of the scope of the patent application.
- Both values are the same. Then, the system RTS executes the respective job $\tau_{i,j}$ and then applies a MAC function on the result $M_o$ of this job, in order to send it to recipients $A_1$, $A_2$... $A_M$.

It chooses a key shared with these recipient and uses the previously-determined security level $\alpha j$ for selecting the appropriate MAC function.

According to embodiments, the output message $M_o'$ may a concatenation of the security level $\alpha j$, the result $M_o$ and the value resulting of the application of the MAC function determined by the security level $\alpha j$ on this concatenation.

This can be formalized as:

$$M_o' = (\alpha j \parallel M_o \parallel MAC_{\alpha j}(\alpha j \parallel M_o))$$

When receiving this message $M_o'$, the recipient can check it by applying the MAC function identified by the security level $\alpha j$ (which is contained in the message) onto the concatenation $\alpha j \| M_o$, and compare the resulting value with the received value for $MAC_{\alpha j}(\alpha j \| M_o)$.

As previously, in case of difference, an alarm can be triggered and its handling is beyond the scope of the invention.

Furthermore, according to the invention, the tasks that the real-time system RTS has to execute, are associated to some parameters which are required for scheduling them.

According to embodiments of the invention, the parameters assigned to a task $\tau_i$ may comprise some parameters

among:

- $C_i$, the worst-case execution time (WCET);
- $D_i$, the relative deadline of the task
- $P_i$, the period related to the task. It represents the minimum interval between two jobs generated by $\tau_i$. Since deadline are implicit, this parameter is equal to the relative deadline.
- $[\Omega_{i,min}, \Omega_{i,max}]$ is a couple determining the minimum and maximum security levels required by the input and output of the task. These security levels determine the instance of the function to use for both (1) verify the identity and validity of the data received from the sources and (2) create the MAC to send to the recipients. The couple values are given by:

$$S_{min} < \Omega_{i,min} < \Omega_{i,max} < S_{max}$$

where $S_{min}$ and $S_{max}$ are respectively the smallest and the largest security level within the system. Their values depend on the latter. i is a unique identifier for each task in the system. $\tau_{i,j}$ represents the $j^{th}$ instance (job) of the task i.

$D_i=P_i$ represent a time constraints for the task. Together with the WCET execution time, a scheduled time can be derived.

According to embodiments, one assumes that jobs from a same task require the same security level for the input and for the output. Furthermore, it is assumed that the parameters associated to the task are generally inherited by each instance of the task.

One can further assume that the system is preemptive and that considered tasks are independent, i.e. the only shared resource is the CPU. One can also assume that the sensors are not concurrent and a task processes the data received from at most one sensor. Such assumptions are made in the following for the sake of simplicity of the explanations. The skilled person would however be able to derive some variations from these embodiments, based on other assumptions.

The security levels are selected during the system design: an integer between $S_{min}$ and $S_{max}$ is assigned to each task, which determines the importance of security to this task. One can understand that even for critical systems, there may be a diversity of security required by each task of the system.

A function f may be used to determine the time overhead implied by each security level. This function f is a monotonically increasing function, whose values depend on the processing material and which can be precomputed. It gives the number of time units required for a given instance of the MAC function. The security level of a particular instance is directly proportional to the cost of its execution.

Formally, the function f can be defined as:

$$f: [S_{min}, S_{max}] \in \mathbb{N} \longrightarrow \mathcal{R}: \alpha \longmapsto f(\alpha) = \hat{\alpha}$$

In the following $\hat{\alpha}$ denotes $f(\alpha)$.

The security level $\alpha$ allows an abstraction to keep the same model by changing the concrete keyed hash functions. In order to select another MAC function, one would need to determine the parameters that reflects its cryptographic strength.

The following table shows the security level values according to the capacity parameter c. The last row represents the time needed (in cycle per byte) to hash a message for each security level (i.e. the time overhead due to security).

| | $\alpha_1$ | $\alpha_2$ | $\alpha_3$ | $\alpha_4$ | $\alpha_5$ | $\alpha_6$ |
|---|---|---|---|---|---|---|
| c | 256 | 448 | 512 | 576 | 768 | 1024 |
| $\alpha$ | $S_{min}=2^{128}$ | $2^{224}$ | $2^{256}$ | $2^{288}$ | $2^{384}$ | $S_{max}=2^{512}$ |
| Cycles/bytes | 10 | 20 | 35 | 50 | 60 | 70 |

The invention is generally independent of the ordering of the jobs to be executed. In other words, several embodiments can be proposed to determine this ordering.

According to one of these embodiments, an offline scheduling algorithm can be used. This scheduling algorithm is used at the system design phase.

The set of jobs to be scheduled shall be schedulable with the minimum security levels assigned to each job and the maximum execution time (WCET).

This offline scheduling algorithm may use the Earliest Deadline First algorithm (EDF) to order to jobs to execute. This rule will simply assign priority to the jobs of which the absolute deadline is the closest. Such EDF rule is further detailed in C. Liu and J. Layland, « Scheduling Algorithms for Multiprogramming in an Hard - Real-Time Environment Scheduling Algorithms for Multi-programming », in ACM, vol. 20, no. 1, pp. 46-61, 1973.

It results from this a sequence of task instances, which can be called "$\alpha$-queue ». This $\alpha$-queue may be a data structure providing an order of the jobs to be executed by the real-time system RTS. To each of these job, parameters can be assigned, these parameters comprising a scheduled time. This scheduled time can be determined according to the estimate $C_i$ of the duration of the task and termination time of the previous jobs in the $\alpha$-queue.

The estimate $C_i$ of the execution time of a task is the worst-case execution time, WCET. The worst-case execution time (WCET) of a computational task is the maximum length of time the task could take to execute on a specific hardware platform. It is a well-known concept in the art, and for instance explained in the following Wikipedia page: https://en.wikipedia.org/wiki/Worst-case_execution_time

Worst case execution time is typically used in reliable real-time systems, where understanding the worst case timing behavior of software is important for reliability or correct functional behavior. However, the invention aims in considering also the effective execution time and take benefit of the difference between both to assign a security service to subsequent jobs in order to improve the security of the whole sequence of tasks.

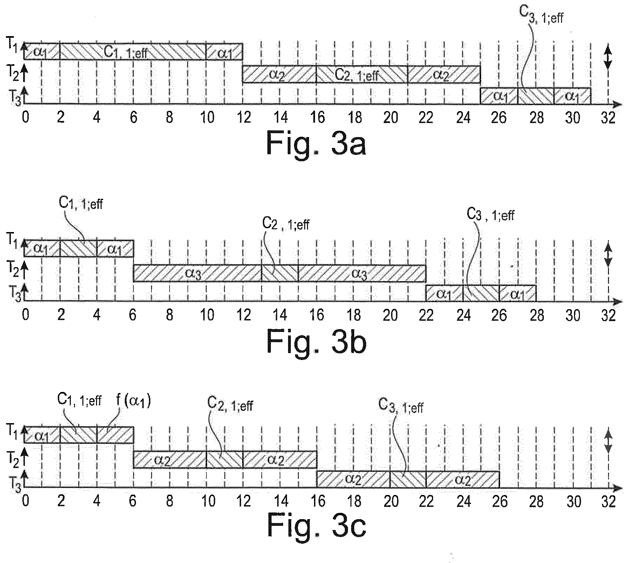

FIG. 3A shows a diagram illustrating such an $\alpha$-queue for a simple example made of three tasks. Only the first instances $\tau_{1,1}$, $\tau_{2,1}$, $\tau_{3,1}$ of the tasks are represented on the figure.

$$\tau_1 = ( C_1=8, P_1=D_1=32, [\Omega_{1,min}=\alpha_1; \Omega_{1,max}=\alpha_3] )$$

$$\tau_2 = ( C_2=5, P_2=D_2=42, [\Omega_{2,min}=\alpha_2; \Omega_{2,max}=\alpha_4] )$$

$$\tau_3 = ( C_3=2, P_3=D_3=60, [\Omega_{3,min}=\alpha_1; \Omega_{3,max}=\alpha_5] )$$

For the sake of simplicity, we normalize the values by using the function f, explained previously, which gives the following values:

$$\hat{\alpha}_1 = 2, \hat{\alpha}_2 = 4, \hat{\alpha}_3 = 7$$
$$\hat{\alpha}_4 = 2, \hat{\alpha}_5 = 12, \hat{\alpha}_6 = 14$$

As depicted on FIG. 3a, the EDF rule assigns to highest priority to the first job $\tau_{1,1}$. The full $\alpha$-queue may be

$$\alpha\text{-queue} = \{ [\tau_{1,1}; 0], [\tau_{2,1}; 12], [\tau_{3,1}; 25] \}.$$

The value following each task identifier represents the scheduled time (the time at which the job starts on FIG. 3a)

The online scheduling algorithm according to embodiments of the invention may take such a sequence of instances (or a-queue) as input.

FIG. 2 shows a high-level organigram of a method according to embodiments of the invention.

In a first step S1, the real-time system RTS tests when it has to schedule a new job. It happens when a previous job is achieved, freeing the computing resources (CPU...) for a new job to be executed.

Then, the system RTS picks up the next job inside the $\alpha$-queue and compares the scheduled time for this job inside the $\alpha$-queue and a current time. From this comparison, at step S2, it determines a time difference. As the scheduled time is based on the WCET, this time difference is always an earliness, or, at worse, null.

According to the invention, in a step S3, the real-time system RTS assigns a security service to at least one instance of said sequence from said new instance, based on the time difference determined at step S2. In other words, the time difference may be used to increase the security by selecting a higher level security service, which the one previously provisioned (if any). Then, once a time difference is generated by a job having terminated earlier than expected, it can be used to increase the security of the next job(s) by assigning a security service.

According to some embodiments, security services are originally assigned to the jobs (for instance at a very low level), then the time differences can be used to assign "better" security services, providing better security performance on the cost of an overhead inferior to the generated time difference. As explained above, the security performance, or security level, can be understood, as the difficulty for a third party to maliciously attack the related job.

According to some embodiments, the security service consists in performing deciphering and ciphering actions on messages, respectively received and sent by the system RTS. In particular, the security service consists in a MAC service, providing integrity and authentication to the received and sent messages.

In particular, according to some embodiments, assigning a security service consists in determining a security level $\alpha$, which, in turn, select the appropriate MAC function. In other words, a particular MAC function is selected according to a corresponding security level by comparing the time difference and a time overhead $f(\alpha)=\hat{\alpha}$ associated with a set of security levels (as shown in the example table above).

Accordingly, the time difference may be used to increase the security by selecting a higher value for the security level, or, more generally, by determining a "better" security service. This determination can be based on the function $f$ linking the security levels $\alpha$ with the time overheads $\hat{\alpha}$.

FIGS. 3b and 3c are based on the example of FIG. 3a, wherein the real executing time for the jobs are as follows:

$$C_{1,1,\text{eff}} = 1$$
$$C_{2,1,\text{eff}} = 2$$
$$C_{3,1,\text{eff}} = 2$$

Then, at instant 6, the real-time system RTS can schedule the next job $\tau_{2,1}$ (instead of instant 12 as in FIG. 3a). The time difference is 6 time units. Similarly, the job $\tau_{3,1}$ can be started with a time difference of 7 units.

These time differences can then be used to increase the security level (previously assigned at $\alpha_2$ and $\alpha_1$ for, respectively $\tau_{2,1}$ and $\tau_{3,1}$. However, the time difference is cumulative: the time difference of a job can take benefit of the time differences of all previous jobs inside the $\alpha$-queue. Several strategies are thus possible to allocate the time difference from one job over the subsequent jobs. FIGS. 3b and 3c show the results of two different strategies:

As for FIG. 3b, the time difference of job $\tau_{1,1}$ can be used to increase the security level for the next job only. As the time difference is 6 time units, the increase of security level should have a time overhead as close as possible of this threshold but below it.

According to the figures provided here-above, the most appropriate overhead is $\hat{\alpha}_3$=7. Then, the security level for the job $\tau_{2,1}$ passes from $\Omega_{2,1}=\alpha_2$ to $\Omega_{2,1}=\alpha_3$.

The job $\tau_{2,1}$ then terminates at time t=22 (instead of time t=23 in FIG. 3a). Unfortunately, this time difference is not sufficient to improve the security service for the next job $\tau_{3,1}$ which would require an overhead of 4 time units to pass from the security level $\Omega_{3,1}=\alpha_1$ to $\Omega_{3,1}=\alpha_2$.

As for FIG. 3c, the time difference of job $\tau_{1,1}$ can be used to increase the security levels of several subsequent jobs, i.e. jobs $\tau_{2,1}$ and $\tau_{3,1}$.

In particular, the time difference can be used for only job $\tau_{3,1}$. Then, the security level can pass from $\Omega_{3,1}=\alpha_1$ to $\Omega_{3,1}=\alpha_2$. The generated overhead is 4 time units. The remaining 2 time units cannot be used.

In any of these scenarios, the security has been improved for one job, which increases the overall security of the system and of the whole sequence of tasks to be executed. Nonetheless, it appears that different strategies can be used, each providing different advantages.

A first strategy is based on the random choice of a job among the subsequent jobs of the $\alpha$-queue.

A second strategy assigns the time difference to the job inside the $\alpha$-queue with the lowest security level. The motivation behind this strategy is that it is possible to never have an earliness on the future execution. The weakest job is to the most adaptable candidate to increase the overall security using the available time difference, without hopes in future time differences. For this reason, this strategy can be called "pessimistic strategy".

A third strategy is called, on the contrary, "optimistic strategy" and is based on the assumption that future jobs will generate more time differences. Accordingly, it increases the security level of the next job only.

A fourth strategy may consist in evenly distributing the time difference among all the subsequent jobs of the $\alpha$-queue. The first job in the queue may receive the remainder of this division.

The skilled person would appreciate that other strategies may be put in place, and that some of these strategies may be combined, or even arbitrated in real-time according to certain parameters of the real-time system RTS.

For instance, if several job on the row generates a time difference, it may mean that the computing resources are faster as expected for some reasons, and that the probability to get more time differences in the next jobs is high. Then, the strategy may switch from a previous one to an optimistic strategy.

An algorithm according to embodiments of the invention is described here-below in pseudo language:

α-queue ← offlinescheduling();

ε ← 0

While True do

    e ← newEvent()

    If e=="Arrival" then

        $\tau_{x,y}$ ← the current job

        ε ← ε + computeTimedifference($\tau_{x,y}$, α-queue)

        If ε≠0 then

            $\Omega_{x,y}$ ← increaseSecurityLevel($\tau_{x,y}$, ε)

    End if

    End if

    $\tau_{i,j}$ ← the job with the highest priority

    checkInputData($\tau_{i,j}$, $\Omega_{i,j}$)

    execute($\tau_{i,j}$)

    checkOutputData($\tau_{i,j}$, $\Omega_{i,j}$)

end while

The function names are mostly self-explanatory. "offlinescheduling" is the function establishing the ordering of the α-queue (for instance by applying EDF rule). "newEvent()" is a function returning an event triggering the scheduling (end of previous job, i.e. "arrival", etc.); checkInputData($\tau_{i,j}$, $\Omega_{i,j}$) and checkOutputData($\tau_{i,j}$, $\Omega_{i,j}$) deploy the security service (for instance by checking the MAC functions for received and sent messages, respectively); "execute" executes a task and "computeTimedifference" and "increaseSecurityLevel" correspond to the steps S2 and S3, respectively, as previously described.

To compare the various strategies between them, a metric can be defined. Such metric is independent of the used strategy and includes the quality of the security and reflects the evolution of the system. Indeed, the security levels appearing in the system, alone, do not describe the whole reality, especially, if we want to ensure the highest possible level during the life of the system.

We thus define an effective utilization measurement for each job $\tau_{i,j}$ as follows:

$$U_{i,j,eff} = \frac{C_{i,j,eff} + 2 * \hat{\Omega}_{i,j}}{P_i}$$

In order to compare the various strategies, the following metric can be used: given a strategy ST, an Overall Strategy Level, OSL, can be calculated as:

$$OSL_{ST} = \sum_{i=1}^{n} \sum_{j=1}^{m_i} \Omega_{i,j} * U_{i,j,eff}$$

where n is the number of tasks appearing in the system and $m_i$ is the number of jobs generated by the task I on the hyper-period P which is defined as the least common multiple of the period of tasks in a periodic system.

In order to evaluate the benefits of the inventions, tests have been undertaken on a given platform defined by a 2.3 GHz Intel Core i5 CPU with 8GB of RAM.

The resulting figures will be provided with respect to two reference strategies:

"min": represents a naive approach wherein no security services are provided according to the generated overheads. Simply, the next jobs will be scheduled earlier, as soon as the CPU is freed.

"max": this strategy executes jobs using their maximum security requirements. Obviously, then, this approach does not guarantee that deadlines are met. In other words, the execution of jobs with their maximum security levels may cause exceeded deadlines. However, this strategy is a reference providing the maximum which can be reached with jobs' security requirements.

It is clear, then, that any suitable strategy to mix both time commitment requirement and security requirement should lie somewhere between those 2 reference strategies, which each comply with only one of the requirements.

Then, the gain of a strategy ST can be calculated based on the metric defined here-above as:

$$Gain_{ST} = \frac{OSL_{ST} - OSL_{min}}{OSL_{max} - OSL_{min}}$$

where $OSL_{min}$ is the minimum overall security level;
$OSL_{max}$ is the maximum overall security level, and

$$OSL_{min} = \sum_{i=1}^{n} \sum_{j=1}^{m_i} \Omega_{i,max} * \frac{C_{i,j,eff} + 2 * \widehat{\Omega}_{i,j,min}}{P_i}$$

$$OSL_{max} = \sum_{i=1}^{n} \sum_{j=1}^{m_i} \Omega_{i,max} * \frac{C_{i,j,eff} + 2 * \widehat{\Omega}_{i,j,max}}{P_i}$$

Our simulator uses a task generator to yield random periodic systems. This generator takes two parameters: the number of tasks and the maximum utilization per system.

For each task in the system, the WCET is estimated with advanced analysis methods. These methods also estimate the best-case execution time (BCET) which is defined as the shortest execution that could ever be observed when a job from this task is run. The effective execution time for each job is a random variable following a truncated skew normal between the best and the worst-case execution times.

FIG.4 shows the effects of varying the number of tasks for a variety of strategies.

ST1 represents the first strategy defined here-above ("random"); ST2 represents the second strategy ("pessimistic"), ST3 represents the third strategy ("optimistic") and ST4 represents the fourth strategy ("fair" or "even").

Obviously, the 4 corresponding curves are comprised between the "min" and "max" strategies. The following observations can also be made:

- For two tasks, it is obvious that all strategies provide the same security improvement (50%): when the first job terminates, the second job is the only one which can take advantage of the generated time difference;
- ST3 always bring the best security improvement (up to 90%). In comparison with ST1, this improvement is noteworthy (30% to 40%);
- ST4 shows a behavior as good as ST3 for system containing more than 40 tasks;
- ST1 is doing better that ST2. This can be explained by the lost units when selecting jobs with the lowest security levels.

Furthermore, simulations have demonstrated that any strategies provide better results than the "min" strategy. Clearly, the invention according to any embodiments provide improvement over the existing situation.

The invention has been described with reference to preferred embodiments. However, many variations are possible within the scope of the invention.

**Claims**

1. Method for scheduling a sequence of task instances in a real-time computing system, comprising assigning parameters to each instance, said parameters comprising a scheduled time; and, for each current instance to be scheduled (S1);

    - determining (S2) a time difference between the scheduled time assigned to said current instance and a current time;
    - assigning (S3) a security service to at least one instance of said sequence from said current instance, based on said time difference.

2. Method according to the previous claim, wherein said scheduled time is based on a Worst-Case Execution Time.

3. Method according to any of the previous claims, wherein said security service consists in performing deciphering and ciphering actions on messages, respectively received and sent by said real-time system, wherein assigning a security service comprises selecting a parameter controlling said security service, and wherein said instances consume the received messages and produce the sent messages.

4. Method according to the previous claim, wherein said security service consists in a MAC service, providing integrity and authentication to the received and sent messages.

5. Method according to the previous claim, wherein a particular MAC service is selected according to a corresponding security level by comparing said time difference and a time overhead associated with a set of security levels.

6. Method according to the previous claim, wherein said received messages comprise a set of values obtained by applying a MAC function with different security levels.

7. Method according to any of the previous claims, wherein said sequence of task instance is ordered by applying a Earliest Deadline First, EDF, rule.

8. Method according to any of the previous claims, wherein said time difference is evenly used for determining a security service of all task instances of said sequence from said current instance

9. Method according to any of claims 1 to 7, wherein said time difference is used for determining a security service for the next instance of said sequence, after said current instance.

10. Method according to any of claims 1 to 7, wherein said time difference is used for determining a security service for the instance of said sequence, after said current instance, which has the lowest security service.

11. Computer program product comprising instructions which, when the program is executed by a computer, cause the computer to carry out the steps of the method according to any of the previous claims.

12. Real time system (RTS) having control means for scheduling a sequence of task instances configured for assigning parameters to each task instance, said parameters comprising a scheduled time; and, for each current instance of said sequence to be scheduled;

    - determining a time difference between the scheduled time assigned to said current instance and a current time;
    - assigning a security service to at least one instance of said sequence from said current instance, based on said time difference.

13. Real time system (RTS) according to the previous claim, further comprising means to receive messages from sources intended for said instances and means to send messages produced by said instances and intended for recipients, wherein said security service consists in a MAC service, providing integrity and authentication to said messages.

14. Method for scheduling a sequence of task instances in a real-time computing system, each instance receiving messages from sources and sending messages to recipient, and said method comprising assigning parameters to each instance, said parameters comprising a scheduled time; and, for each current instance of said sequence to be scheduled;

- determining a time difference between the scheduled time assigned to said current instance and a current time;
- assigning a security level to said at least one instance of said sequence from said current instance, based on said time difference.
- determining a MAC function to use for deciphering and ciphering said messages, said MAC function being selected among a set of MAC functions according to said security level.

Fig. 1

Fig. 2

Fig. 3a

Fig. 3b

Fig. 3c

Europäisches
Patentamt

European
Patent Office

Office européen
des brevets

# EUROPEAN SEARCH REPORT

Application Number

EP 19 16 0292

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 568 346 A1 (AIRBUS OPERATIONS SAS [FR]) 13 March 2013 (2013-03-13) <br> * abstract; figures 1-3 * <br> * paragraph [0005] * <br> * paragraphs [0052], [0056] * <br> ----- | 1-14 | INV. <br> G06F21/55 <br> G06F21/54 <br> G06F9/00 |
| A | US 2012/079486 A1 (BRANDT SCOTT A [US] ET AL) 29 March 2012 (2012-03-29) <br> * abstract; figures 1-5 * <br> * paragraph [0007] - paragraph [0009] * <br> ----- | 1-14 | |
| A | US 2008/282246 A1 (DOLEV DANNY [IL] ET AL) 13 November 2008 (2008-11-13) <br> * abstract; figures 1-7 * <br> * paragraph [0007] - paragraph [0010] * <br> ----- | 1-14 | |

|  | TECHNICAL FIELDS SEARCHED (IPC) |
|---|---|
|  | G06F |

The present search report has been drawn up for all claims

| Place of search | Date of completion of the search | Examiner |
|---|---|---|
| Munich | 19 August 2019 | Harms, Christoph |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 19 16 0292

This annex lists the patent family members relating to the patent documents cited in the above-mentioned European search report.
The members are as contained in the European Patent Office EDP file on
The European Patent Office is in no way liable for these particulars which are merely given for the purpose of information.

19-08-2019

| Patent document cited in search report | | Publication date | Patent family member(s) | | Publication date |
|---|---|---|---|---|---|
| EP 2568346 | A1 | 13-03-2013 | CN | 102981405 A | 20-03-2013 |
| | | | EP | 2568346 A1 | 13-03-2013 |
| | | | US | 2013219402 A1 | 22-08-2013 |
| US 2012079486 | A1 | 29-03-2012 | US | 2012079486 A1 | 29-03-2012 |
| | | | US | 2013283279 A1 | 24-10-2013 |
| US 2008282246 | A1 | 13-11-2008 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S. RAVI ; A. RAGHUNATHAN ; P. KOCHER.** Security in Embedded systems: Design Challenges. *ACM Transactions on Embedded Computing Systems,* 2004, vol. 3 (3), 461-491

- **C. LIU ; J. LAYLAND.** Scheduling Algorithms for Multiprogramming in an Hard - Real-Time Environment Scheduling Algorithms for Multi-programming. ACM, 1973, vol. 20, 46-61